# EUROPÄISCHE PATENTSCHRIFT

(11) **EP 0 422 592 B1**
(45) Veröffentlichungstag und Bekanntmachung des Hinweises auf die Patenterteilung: **28.12.1994**
(21) Anmeldenummer: 90119355.7
(22) Anmeldetag: 09.10.1990
(51) Int. Cl.: B60J 10/00, B60R 13/06

(54) **Klemmprofilanordnung**
Clamping sealing joint
Profil maintenu par pinçage

(30) Priorität: 11.10.1989 DE 3933961
(43) Veröffentlichungstag der Anmeldung: 17.04.1991
(73) Patentinhaber: METZELER Automotive Profiles GmbH, D-88131 Lindau (DE)
(72) Erfinder: Arnheim, Hans-Rudolf, W-3181 Jembke (DE); Müller, Hans, W-3180 Wolfsburg (DE)
(74) Vertreter: Seibert, Hannelore

(56) Entgegenhaltungen:
- EP-A- 0 116 264
- FR-A- 2 332 409
- US-A- 4 531 326
- US-A- 4 576 773

## Beschreibung

Die Erfindung bezieht sich auf eine Klemmprofilanordnung zum Aufstecken auf einen Flansch, insbesondere zur Verwendung im Automobilbau, mit einer ersten und einer zweiten aus gummiartigem Werkstoff mit zur Erhöhung der Klemmkraft integriertem U-förmigen Gerüstband bestehenden, im Querschnitt U-förmigen Klemmleisten, deren jeweils außenliegender Schenkel als Abdecklippe ausgebildet ist, wobei die Abdecklippe der ersten Klemmleiste im wesentlichen deutlich breiter ist als die der zweiten Klemmleiste und wobei die unterschiedlichen Breiten der beiden in einem Übergangsbereich aneinanderstoßenden Klemmleisten aneinander angepaßt sind, sowie ein Verfahren zu ihrer Herstellung.

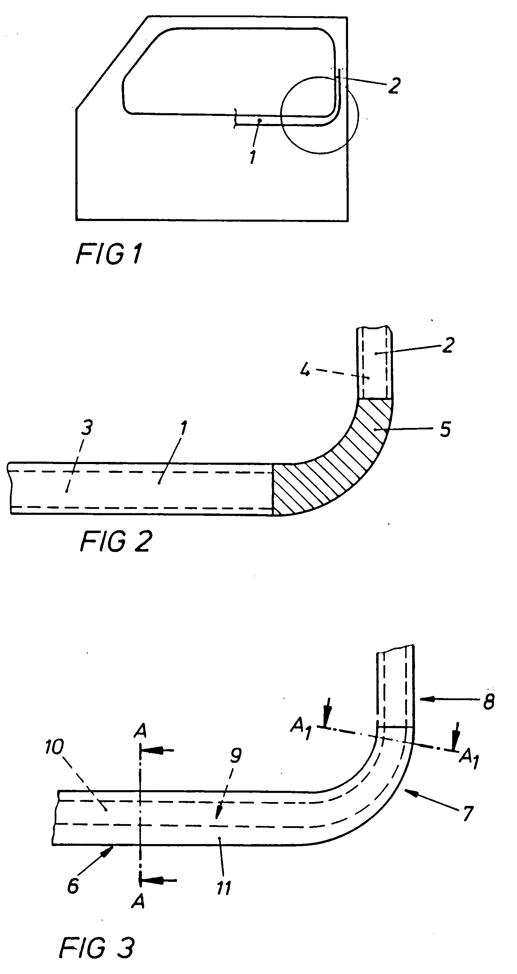

Eine übliche Fensterschachtabdichtung ist in der Zeichnung in Fig. 1 als Übersicht und im größeren Maßstab ausschnittsweise in Fig. 2 dargestellt. Aus unterschiedlichen Gründen ist die außenliegende, also sichtbare Abdecklippe des horizontalen Abschnittes 1 breiter als die des vertikalen Abschnittes 2. Beide Abschnitte 1 und 2 sind für sich im Extrudierverfahren hergestellt, wobei die die Klemmkraft erhöhenden Gerüstbänder 3 und 4, die hier durch gestrichelte Linien angedeutet sind, gleich miteingearbeitet sind. Die Enden der Abschnitte 1 und 2 sind im Übergangsbereich durch ein separat gespritztes Formteil miteinander verbunden, wie das beispielsweise aus der FR-A-2 332 409 bekannt ist.

Eine solche Anordnung mit einem zwischengefügten, separat gespritzten Formteil hat verschiedene Nachteile. So gibt es optische Unterschiede zwischen den im Extrudierverfahren gefertigten Abschnitten 1 und 2 einerseits und dem nach einem anderen Verfahren hergestellten Formteil 5 andererseits durch fertigungsbedingt unterschiedlichen Glanzgrad. Ferner besteht gerade im kritischen Radienbereich in Folge eines dort fehlenden Gerüstbandes eine schlechtere Klemmwirkung des Formteils 5 auf dem Türflansch. Schließlich ist eine solche Anordnung mit einem relativ hohen Fertigungsaufwand verbunden.

Der Erfindung liegt daher die Aufgabe zugrunde, eine Klemmprofilanordnung nach dem Stande der Technik dahingehend zu verbessern, daß die zuvor genannten Nachteile vermieden werden.

Zur Lösung dieser Aufgabe ist daher erfindungsgemäß vorgesehen, daß zur Anpassung beider Klemmleisten der außenliegende Schenkel des in die erste Klemmleiste samt Übergangsbereich integrierten Gerüstbandes die gleiche Breite hat wie der des außenliegenden Schenkels des in die zweite Klemmleiste integrierten Gerüstbandes, wobei der Übergangsbereich einstückig mit der ersten Klemmleiste ausgebildet ist, und daß die Breite der Abdecklippe im Übergangsbereich durch eine Beschneidoperation der Breite der zweiten Klemmleiste angepaßt ist.

Weitere zweckmäßige Augestaltungen der Erfindung sind in den Unteransprüchen 2 bis 4 genannt, während die Ansprüche 5 und 6 zwei verschiedene Herstellungsverfahren für ein solches Klemmprofil angeben.

Ein Ausführungsbeispiel der Erfindung sowie zwei Herstellverfahren werden, mit Bezug auf die weiteren Figuren in der Zeichnung naher erläutert. Es zeigen
- Figur 3: eine der Figur 2 entsprechende Ansicht einer Fensterschachtabdichtung, bei der die Erfindung realisiert ist,
- Figur 4: eine Schnittdarstellung durch die in Figur 3 gezeigte Fensterschachtabdichtung im Einbauzustand entsprechend den Schnittlinien A-A bzw. A₁-A₁,
- Figur 5: die schematische Darstellung der Herstellung der ersten Klemmleiste nach einem ersten Verfahren und
- Figur 6: die schematische Darstellung der Herstellung der ersten Klemmleiste nach einem zweiten Verfahren.

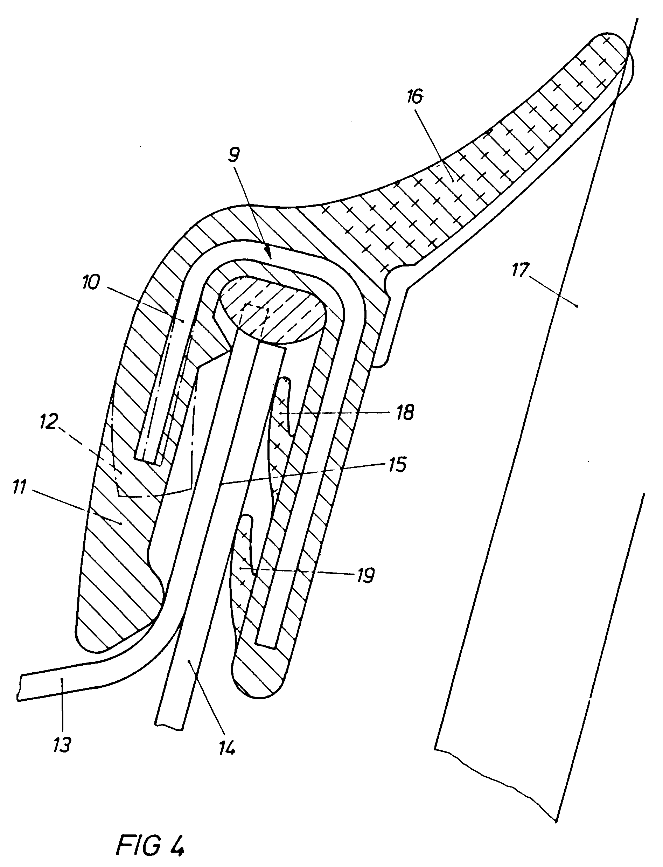

Die Fensterschachtabdichtung gemäß den Figuren 3 und 4 umfaßt einen horizontalen Abschnitt 6, einen Übergangsbereich 7 und einen senkrechten Abschnitt 8. Erfindungsgemäß bestehen der Abschnitt 6 und der Übergangsbereich 7 aus einem Stück mit einem durchgehenden Gerüstband 9. Die einstückige Fertigung ist deshalb möglich, weil der außenliegende Schenkel 10 des Gerüstbandes 9 - wie auch ein Vergleich mit Figur 2 sofort zeigt - deutlich kürzer ist als die Breite der Abdecklippe des Abschnitts 8, so daß die Breite der Abdecklippe im Übergangsbereich 7 durch eine Beschneidoperation der Breite des Abschnitts 8 leicht angepaßt werden kann. Die Beschneidoperation kann im unmittelbaren Anschluß an den Extrudierprozeß erfolgen.

Die infolge des vergleichsweise kürzeren Gerüstbandschenkels im Abschnitt 6 verminderte Klemmkraft kann beispielsweise dadurch kompensiert werden, daß zumindest die Abdecklippe 11 des Abschnitts 6 aus Hartgummi hergestellt ist.

Diese Abdecklippe 11 ist zweckmäßigerweise mit einem dünnen Überzug aus Weichgummi versehen, um die Oberflächenbeschaffenheit einem benachbarten Weichgummiprofil anzupassen.

Die unterschiedlichen Breiten der außenliegenden Abdecklippen im Abschnitt 6 und im Übergangsbereich 7 kommen auch in Figur 4 deutlich zum Ausdruck, weil hier zwei verschiedene Schnitte in einer Figur dargestellt sind. Der Unterschied zwischen beiden Schnitten tritt im außenliegenden, also in dem in der Zeichnung links liegenden Schenkel 11, 12 hervor, der in seiner Breite ausgehend von dem bis in die Rundung des Türaußenblechs 13 ragenden Maß allmählich abnimmt bis auf das in strichpunktierten Linien dargestellte Maß.

Die im wesentlichen U-förmige Klemmleiste mit dem eingebetteten asymmetrischen Gerüstband 9 ist auf einen aus dem Türaußenblech 13 und einem Verstärkungsblech 14 gebildeten Flansch 15 aufgesteckt. An ihrer Oberseite ist eine Dichtlippe 16 angearbeitet, die mit ihrem freien Ende federnd und dichtend an der absenkbaren Türfensterscheibe 17 anliegt. Während die Dichtlippe 16 wie auch zwei weitere Lippen 18, 19 aus Weichgummi besteht, ist der das Gerüstband 9 umschließende Teil der Klemmleiste im wesentlichen aus Hartgummi gefertigt; das erhöht den Festsitz der Klemmleiste auf dem Flansch 15.

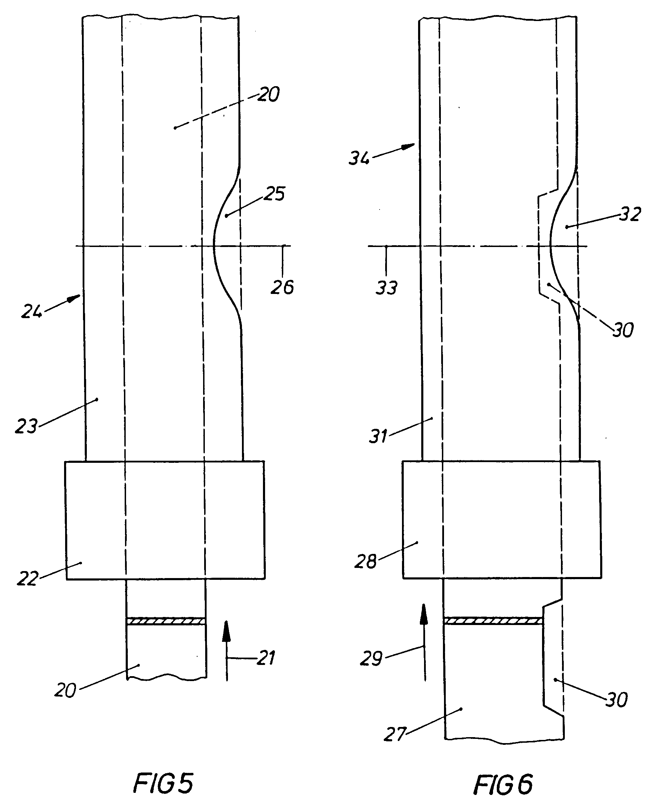

Zur Herstellung der ersten Klemmleiste, also des in Fig. 3 gezeigten einteiligen Abschnitts, der sich aus den Teilabschnitten 6 und 7 zusammensetzt, werden im Rahmen der Erfindung zwei Verfahren vorgeschlagen, die nachstehend anhand der Figuren 5 und 6 erläutert werden.

Bei dem Verfahren nach Fig. 5 wird ein relativ schmales Gerüstband 20, das in diesem Stadium noch ein unverformtes, ebenes Gebilde ist, in Richtung des Pfeiles 21 durch ein Extrudierwerkzeug 22 geführt und dort mit einer Hartgummimasse 23 umspritzt. Kurz hinter dem Extrudierwerkzeug 22 wird der Extrusionsstrang 24 an einem zeichnerisch nicht dargestellten Messer vorbeigeführt, das in vorgegebenen Abständen definierte Aussparungen 25 in die Umhüllung 23 schneidet, ohne daß dabei das Gerüstband 20 stört, weil es ja von vornherein schmaler als üblich gewählt worden war. Im Bereich solch einer Aussparung 25, beispielsweise längs der Linie 26, wird dann der Extrusionsstrang 24 abgeschnitten. Schließlich wird der abgeschnittene Teil profiliert, wodurch die erste Klemmleiste, entsprechend den Abschnitten 6 und 7 in Fig. 3, ihre endgültige Form erhält.

Das Verfahren nach Fig. 6 unterscheidet sich von dem vorhergehenden im wesentlichen dadurch, daß hier ein normal breites Gerüstband 27 verwendet wird. Dieses wird jedoch vor dem Einzug in das Extrudierwerkzeug 28 in Richtung des Pfeiles 29 örtlich mit Ausklinkungen 30 versehen. Im Extrudierwerkzeug 28 wird das Gerüstband 27, das zunächst noch unverformt, also eben ist, dann umhüllt, und zwar kann das in diesem Falle durchaus mit Weichgummi 31 geschehen, weil das breitere Gerüstband 27 später für eine ausreichende Klemmkraft sorgt. Hinter dem Extrudierwerkzeug 28 ist eine zeichnerisch nicht dargestellte Beschneideinrichtung vorgesehen, mit deren Hilfe in die Weichgummiumhüllung 31 definierte Aussparungen 32 geschnitten werden, und zwar genau an den Stellen der Ausklinkungen 30. In diesem Bereich, beispielsweise längs der Linie 33, wird dann der Extrusionsstrang 34 abgeschnitten. Der abgeschnittene Teil wird danach profiliert, so daß eine im Querschnitt U-förmige Klemmleiste entsteht, deren einer Schenkel aufgrund der Beschneidoperation allmählich schmaler wird. An der Schnittstelle hat dann dieser Schenkel dieselbe Breite wie der vergleichbare Schenkel einer sich anschließenden, zweiten Klemmleiste, so daß ein sprunghafter Übergang zwischen den beiden Schenkeln vermieden werden kann.

## Patentansprüche

1. Klemmprofilanordnung zum Aufstecken auf einen Flansch (15), insbesondere zur Verwendung im Automobilbau, mit einer ersten und einer zweiten, aus gummiartigem Werkstoff mit zur Erhöhung der Klemmkraft integriertem U-förmigen Gerüstband (9) bestehenden, im Querschnitt U-förmigen Klemmleisten (6, 8), deren jeweils außenliegender Schenkel (11) als Abdecklippe ausgebildet ist, wobei die Abdecklippe (11) der ersten Klemmleiste (6) im wesentlichen deutlich breiter ist als die der zweiten Klemmleiste (8) und wobei die unterschiedlichen Breiten der beiden in einem Übergangsbereich (7) aneinanderstoßenden Klemmleisten (6, 8) aneinander angepaßt sind, dadurch gekennzeichnet, daß zur Anpassung beider Klemmleisten (6, 8) der außenliegende Schenkel (10) des in die erste Klemmleiste (6) samt Übergangsbereich (7) integrierten Gerüstbandes (9) die gleiche Breite hat wie der des außenliegenden Schenkels (10) des in die zweite Klemmleiste (8) integrierten Gerüstbandes (9), wobei der Übergangsbereich (7) einstückig mit der ersten Klemmleiste ausgebildet ist, und daß die Breite der Abdecklippe im Übergangsbereich (7) durch eine Beschneidoperation der Breite der zweiten Klemmleiste (8) angepaßt ist

2. Klemmprofilanordnung nach Anspruch 1, dadurch gekennzeichnet, daß die erste Klemmleiste im wesentlichen aus Hartgummi besteht.

3. Klemmprofilanordnung nach Anspruch 2, dadurch gekennzeichnet, daß der Hartgummiteil mit einem Überzug aus Weichgummi versehen ist.

4. Klemmprofilanordnung nach Anspruch 1, dadurch gekennzeichnet, daß das Gerüstband geschlitzt ist.

5. Verfahren zur Herstellung der ersten Klemmleiste für eine Klemmprofilanordnung nach einem der Ansprüche 1 bis 4, dadurch gekennzeichnet, daß das zunächst ebene und relativ schmale Gerüstband (20) in einem Extrudierwerkzeug (22) umspritzt, daß danach die Umspritzung (23) jeweils in Höhe des späteren Übergangsbereiches (25) entsprechend der Abdecklippenbreite der zweiten Klemmleiste beschnitten und daß anschließend die soweit vorgefertigte erste Klemmleiste abgelängt und profiliert wird.

6. Verfahren zur Herstellung der ersten Klemmleiste für eine Klemmprofilanordnung nach einem der Ansprüche 1 bis 4, dadurch gekennzeichnet, daß das zunächst ebene, normal breite Gerüstband (27) vor dem Durchlauf durch ein Extrudierwerkzeug (28) - jeweils in Höhe des späteren Übergangsbereiches - örtlich ausgespart (Ausklinkung 30), daß dann das Gerüstband (27) in dem Extrudierwerkzeug (28) umspritzt wird, daß danach in Höhe der Ausklinkung (30) in dem Gerüstband (27) die Umspritzung (31) beschnitten (Aussparung 32) und daß anschließend die soweit vorgefertigte erste Klemmleiste abgelängt und profiliert wird.

## Claims

1. Clamping sealing joint for fitting onto a flange (15), particularly for use in motor car manufacture, with a first and a second clamping strip (6, 8), which is U-shaped in cross-section and comprises rubber-like material with integrated U-shaped support strip (9) to increase the clamping force, each of whose outer leg (11) is designed as a cover lip, the cover lip (11) of the first clamping strip (6) being essentially substantially wider than that of the second clamping strip (8) and the different widths of the two clamping strips (6, 8) adjoining each other in a transitional region (7) being matched to each other, characterized in that in order to match both clamping strips (6, 8), the outer leg (10) of the support strip (9) integrated in the first clamping strip (6) together with the transitional region (7) has the same width as that of the outer leg (10) of the support strip (9) integrated in the second clamping strip (8), the transitional region (7) being formed in one piece with the first clamping strip, and that the width of the cover lip in the transitional region (7) is matched to the width of the second clamping strip (8) by means of a trimming operation.

2. Clamping sealing joint according to Claim 1, characterized in that the first clamping strip essentially comprises hard rubber.

3. Clamping sealing joint according to Claim 2, characterized in that the hard rubber part is provided with a coating of soft rubber.

4. Clamping sealing joint according to Claim 1, characterized in that the support strip is slit.

5. Method for the manufacture of the first clamping strip for a clamping sealing joint according to one of Claims 1 to 4, characterized in that the initially flat and relatively narrow support strip (20) is extrusion-coated in an extrusion die (22), that thereafter the extrusion-coating (23) is trimmed at the level of the subsequent transitional region (25) according to the cover lip width of the second clamping strip and that the first clamping strip pre-fabricated to this extent is then cut to length and profiled.

6. Method for the manufacture of the first clamping strip for a clamping sealing joint according to one of Claims 1 to 4, characterized in that the initially flat, normal-width support strip (27) is recessed at intervals (notch 30) - at the level of the subsequent transitional region - before passing through an extrusion die (28), that the support strip (27) is then extrusion-coated in the extrusion die (28), that the extrusion-coating (31) is then trimmed (recess 32) at the level of the notch (30) in the support strip (27) and that the first clamping strip pre-fabricated to this extent is then cut to length and profiled.

## Revendications

1. Dispositif à profilé de fixation destiné à être enfilé sur une bride (15), notamment en vue de son utilisation dans le domaine de la construction automobile, comportant des première et seconde barrettes de serrage (6, 8) en forme de U en coupe transversale, en un matériau de type caoutchouc, ayant une bande d'ossature en forme de U (9) intégrée de manière à augmenter la force de serrage, dont chaque branche extérieure (1) est réalisée sous la forme d'une lèvre de recouvrement, la lèvre de recouvrement (11) de la première barrette de serrage (6) étant sensiblement nettement plus large que celle de la seconde barrette de serrage (8), et les largeurs différentes des deux barrettes de serrage (6, 8), qui sont en aboutement dans une zone de jonction (7), s'adaptent l'une à l'autre , caractérisé par le fait que, pour l'adaptation des deux barrettes de serrage, la branche extérieure (10) de la bande d'ossature (9) intégrée à la première barrette de serrage (6) y compris la zone de jonction (7), a la même largeur que celle de la branche extérieure (10) de la bande d'ossature (9) intégrée à la seconde barrette de serrage (8), la zone de jonction (7) étant d'un seul tenant avec la première barrette de serrage, et que la largeur de la lèvre de recouvrement dans la zone de jonction (7) est adaptée, au moyen d'une opération de découpage, à la largeur de la seconde barrette de serrage (8).

2. Dispositif à profilé de serrage suivant la revendication 1, caractérisé par le fait que la première barrette de serrage est essentiellement en caoutchouc dur.

3. Dispositif à profilé de serrage suivant la revendication 2, caractérisé par le fait que la partie en caoutchouc dur comporte un revêtement en caoutchouc mou.

4. Dispositif à profilé de serrage suivant la revendication 1, caractérisé par le fait que la bande d'ossature est fendue.

5. Procédé pour fabriquer une première barrette de serrage pour un dispositif à profilé de serrage suivant l'une des revendications 1 à 4, caractérisé par le fait qu'on enrobe par extrusion, dans un outil d'extrusion (22), la bande d'ossature (20) tout d'abord plane et relativement étroite, qu'ensuite on découpe l'enrobage (23) respectivement au niveau de la zone de jonction (25), ultérieure, en fonction de la largeur de la lèvre de recouvrement de la seconde barrette de serrage et qu'ensuite on coupe à longueur la première barrette de serrage, préfabriquée jusqu'ici, et qu'on lui donne sa forme profilée.

6. Procédé pour fabriquer la première barretted e serrage pour un dispositif de profilé de serrage suivant l'une des revendications 1 à 4, caractérisé par le fait qu'on découpe localement (découpe 30) la bande d'ossature (27) tout d'abord plane et de largeur normale - respectivement au niveau de la zone de jonction ultérieure - avant son passage dans un outil d'extrusion (28), qu'ensuite on enrobe par extrusion la bande d'ossature (27) dans l'outil d'extrusion (28), qu'on découpe ensuite (découpe 32) l'enrobage (31) au niveau de la découpe (30) ménagée dans la bande d'ossature (27), et qu'ensuite on coupe à longueur la première barrette de serrage préfabriquée jusqu'ici, et qu'on lui donne sa forme profilée.
